# EUROPÄISCHE PATENTSCHRIFT

(11) **EP 0 812 743 B1**
(45) Veröffentlichungstag und Bekanntmachung des Hinweises auf die Patenterteilung: **06.12.2000**
(21) Anmeldenummer: 97250180.3
(22) Anmeldetag: 10.06.1997
(51) Int. Cl.: B60S 1/10

(54) **Druckmittelbetriebener Scheibenwischer-motor**
Pressure operated windscreen wiper motor
Moteur d'essuie-glace entraîné par fluide

(30) Priorität: 11.06.1996 DE 19625131
(43) Veröffentlichungstag der Anmeldung: 17.12.1997
(73) Patentinhaber: Knorr-Bremse MRP Systeme für Schienenfahrzeuge GmbH & Co. KG, 30453 Hannover (DE)
(72) Erfinder: Lehnert, Erhard, 31311 Uetze (DE); Schülingkamp, Waltraud, 31226 Peine (DE); Kemner, Axel, Dipl.-Ing., 30916 Isernhagen (DE)

(56) Entgegenhaltungen:
- EP-A- 0 658 461
- WO-A-97/10977
- DE-A- 2 652 902
- DE-A- 3 227 656

## Beschreibung

Die Erfindung betrifft einen druckmittelbetriebenen Scheibenwischermotor mit einem doppelt wirkenden Arbeitszylinder, bei welchem zwischen den beiden Kolbenflächen ein Zahnstangenelement, welches auf einem drehbar gelagerten kreisumfangsegmentweise verzahnten Abtrieb zur Wischerbetätigung zusammenwirkt, mit einem Umsteuerschieber, der zwischen der Druckluftzuleitung je nach Stellung des Antriebes das Druckmittel im Bereich der äußeren Endlagen der Kolbenflächen einspeist und im Bereich der inneren Endlagen der Kolbenflächen zur Entlüftung durchschaltet, gemäß Oberbegriff des Patentanspruchs 1.

Druckmittelbetriebene Scheibenwischermotoren dieser Art werden zumeist pneumatisch betätigt. In der grundsätzlichen Bauform wird ein doppelt wirkender Arbeitszylinder verwendet, der zwei Kolben bzw. Kolbenflächen gegeneinander druckmittelbeaufschlagt. Die beiden Kolben bzw. Kolbenflächen sind dabei über eine mechanische Verbindung und eine damit verbundene Zahnstange versehen. Die genannte Zahnstange greift dabei auf einen Drehabtrieb ein, der am Umfang zumindest über einen Teil bzw. Umfangssegment ebenfalls verzahnt ist, ein. Somit wird die lineare Bewegung zwischen den beiden äußeren Endlagen der Kolbenflächen durch den Eingriff auf die segmentweise Verzahnung des Drehabtriebes in eine Drehbewegung umgesetzt. Zur Umsteuerung, d. h. zur Umkehrung der Drehbewegung, sobald eine der Endlagen erreicht ist, wird ein sogenannter Umsteuerschieber verwendet. Hierbei handelt es sich um ein Ventil, bei welchem der Ventilschieber analog zum doppelt wirkenden Arbeitszylinder ebenfalls doppelt wirkend betätigt wird. Der Umsteuerschieber führt, bezogen auf die Bewegung des doppeltwirkenden Arbeitszylinders, dazu entgegengesetzte Bewegungen aus. Der Umsteuerschieber befindet sich zu Beginn zunächst in einer seiner möglichen Endlagen. Über die Entlüftungsleitung wird in dieser Endstellung derjenige Druckraum druckmittelbeaufschlagt, dessen Raum durch die Begrenzung einer der beiden Kolbenflächen minimal ist, d. h. derjenige, der in Endstellung ist. Die Druckmittelbeaufschlagung dieses Teilraumes führt zu einer Verschiebung der beiden Kolbenflächen, die starr miteinander verbunden sind. Die damit starr verbundene Zahnstange wird verschoben und greift auf den Drehabtrieb ein. Erreicht die Zahnstange mitsamt der Kolbenflächen nun die entgegengesetzte Endlage, so wird gleichzeitig eine Steuerbohrung von einer der beiden Kolbenflächen überfahren, die dazu führt, daß der belüftete Druckmittelraum nunmehr auch denjenigen Teilraum des Umsteuerventiles druckmittelbeaufschlagt, der in dieser Momentaufnahme minimal ist. Die Umsteuerung bzw. der Umsteuerstößel wird damit betätigt und in die entgegengesetzte Lage gebracht, was zu einer entgegengesetzten Belüftung des doppeltwirkenden Arbeitszylinders führt. Auf diese Weise wird dann die gegenüberliegende Kolbenfläche in gleicher Weise belüftet, wogegen der zuvor belüftete Zylinderraum entsprechend bei der auszuführenden Bewegung entlüftet wird. Diese Entlüftung erfolgt ebenfalls über eine entsprechende Leitungsführung im Umsteuerventil.

Bei Scheibenwischermotoren dieser bekannten Art ist die Endlage nicht eindeutig definiert. Die Steuerbohrungslagen im Hinblick auf die jeweiligen Kolbenflächenpositionen sind bei Scheibenwischermotoren der bekannten Art so definiert, daß sie kurz vor Erreichen der Endlagen jeweils einen kurzzeitigen Gegendruck erhalten. Der Gegendruck hat die Aufgabe, den Kolben abzubremsen und wieder in die Gegenrichtung zu beschleunigen. Das heißt, der Umsteuervorgang wird vorgenommen, bevor der doppeltwirkende Kolben die jeweilige Endposition erreicht hat, um gleichzeitig mit der Umsteuerung eine Abbremsung zu erhalten. Mit anderen Worten, die jeweilige Kolbenfläche wird bereits druckmittelbeaufschlagt, bevor sie die Endlage erreicht. Durch diese bekannte Funktions- und Betriebsweise kann der Wischermotor keine eindeutige Endlage mehr reproduzieren. Somit unterscheiden sich die erreichbaren Wischwinkel von dem Winkel, der sich zwischen den beiden durch die absoluten Endlagen ergebenden Parkpositionen ergibt. Somit ist der pneumatische Wischwinkel immer kleiner als der Parkwinkel und zudem ungleichmäßig. Da es sich bei der Verwendung von Druckluft um ein stark kompressibles Druckmittel handelt und die Dynamik des Antriebes ohnehin vom Vordruck abhängig ist, entsteht hier darüber hinaus auch eine weitere Abhängigkeit in den Umsteuermomenten des Wischerantriebes. Somit variiert der erreichbare Wischwinkel auch in Abhängigkeit des gewählten oder verfügbaren Vordruckes.

Ebenso verhält es sich bei dem in der gattungsbildenden Schrift DE 32 27 656 A offenbarten druckmittelbetriebenen Scheibenwischermotor mit einem Umsteuerventil sowie einem doppeltwirkenden Arbeitszylinder, in welchem zwei Kolbenflächen mit einem dazwischenliegenden mit einem verzahnte Drehelement zusammenwirkenden Zahnstangenelement verbunden sind, wobei entlang des jeweiligen Betätigungshubes zwei von den jeweiligen Kolbenflächen überfahrene Steuerbohrungen angeordnet sind.

Für eine Verwendung von Wischermotoren dieser Art in der Bahntechnik ist die Erzeugung eines Wischwinkels, der kleiner ist als der Winkel der sich aus den beiden Parkpositionen ergibt, natürlich störend und führt bei starkem Regen zu einem ungewohnt eingeschränkten Sichtfeld.

Der Erfindung liegt daher die Aufgabe zugrunde, den Wischwinkel zu vergrößern und diesen vor allem gleich, und weitgehend vordruckunabhängig zu halten.

Die gestellte Aufgabe wird bei einem druckmittelbetriebenen Wischermotor der gattungsgemäßen Art erfindungsgemäß durch die kennzeichnenden Merkmale des Patentanspruches 1 gelöst.

Eine vorteilhafte Ausgestaltung der Erfindung ist im Anspruch 2 angegeben.

Kern der Erfindung ist im wesentlichen die stufenweise Abbremsung des Antriebes. Durch die Verwendung von einstellbaren Drosseln im Endanschlagsbereich in Verbindung mit den beiden gegensinnig angeordneten Drosseln an jeder Zylinderseite fährt der Kolben mit langsamerer Geschwindigkeit gegen den Anschlag und nutzt denselben voll aus. Das heißt, daß der Wischwinkel nunmehr gleich dem Parkwinkel ist. Gegenüber der bekannten Art der Drosselung liegt beim erfindungsgemäßen Scheibenwischermotor eine reine Abluftdrosselung vor. Zwei Rückschlagventile in gegensinniger Ausrichtung, wobei eines der Rückschlagventile parallel mit einer Drossel versehen ist, wobei diese Anordnung pro Zylinderseite vorgesehen ist, sorgen für einen großen Entlüftungsquerschnitt im Schnellgang und des weiteren für einen einstellbaren gedrosselten Querschnitt im Langsamgang bis zum Anschlag hin.

Neben der Ausnutzung des vollen verfügbaren Winkels zwischen den beiden mechanisch durch die Anschläge der Kolbenflächen vorgegebenen aktiven Winkels führt die erfindungsgemäße Abluftdrosselung auch zu einer Schonung des Materials. Der erfindungsgemäße Scheibenwischermotor ist insgesamt auch langlebiger und damit zuverlässiger und hat somit eine besondere Eignung für die Verwendung in der Bahntechnik.

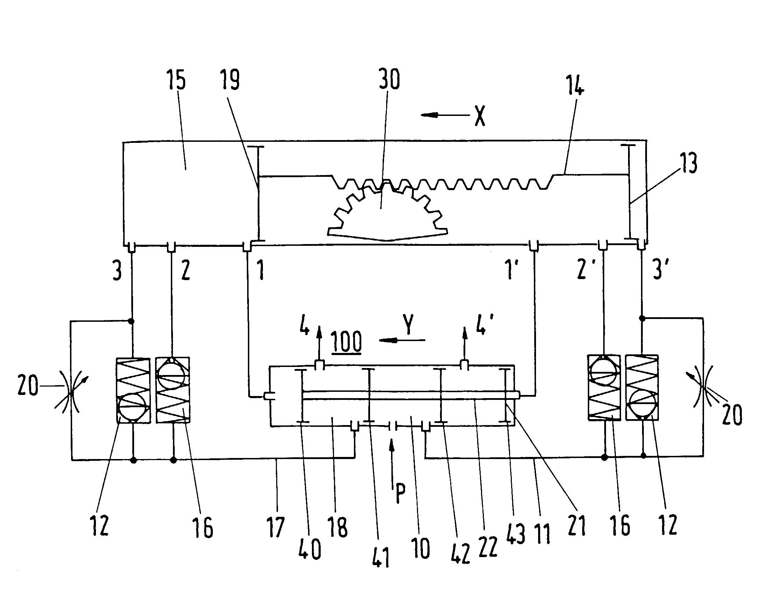

Die Erfindung ist in der Zeichnung dargestellt und im nachfolgend näher erläutert:

Die Abbildung zeigt die einzelnen mechanischen und pneumatischen Elemente nur in ihrem Verschaltungsprinzip. Im oberen Bildteil ist der doppelt wirkende Arbeitszylinder dargestellt. Innerhalb des Arbeitszylinders sind die beiden Kolben bzw. Kolbenflächen 13 und 19 angeordnet. Diese beiden Kolbenflächen sind gegenüber der Zylinderwandung druckmitteldicht dynamisch abgedichtet. Die beiden Kolbenflächen 13, 19 bzw. die entsprechenden Kolben sind starr miteinander verbunden über eine Zahnstange 14. Die Zahnstange weist über den notwendigen Längenbereich eine verzahnte Strecke auf. Diese Verzahnung greift in einen ortsfest drehbar gelagerten Drehabtrieb 30, der im Querschnitt betrachtet nur aus einem Kreissegment mit einer entsprechenden segmentweisen Verzahnung besteht. Über diesen Abtrieb wird die hier nicht weiter dargestellte Mechanik, bzw. der eigentliche Wischer betätigt. Der Arbeitszylinder weist in erfindungsgemäßer Positionierung Steuerbohrungen 1, 2, 3 bzw. 1', 2', 3'auf. Diese Steuerbohrungen sind mit entsprechenden pneumatischen Schalt- oder Bauelementen verbunden. Gesteuert wird die Versorgungsluft P über ein entsprechendes Umsteuerventil 100. Dieses Umsteuerventil 100 enthält einen Umsteuerschieber 22 und (hier schematisch dargestellte) Ventilteller 40, 41, 42, 43. Diese sind, wie hier dargestellt, über die Länge des Umsteuerschiebers 22, abstandsmäßig gleich verteilt. Der Druckmittelversorgungsanschluß bzw. die entsprechende Öffnung in das Umsteuerventil hinein, welches mit P bezeichnet ist, ist in etwa mittig angeordnet. Symmetrisch danebenliegend sind die beiden Druckmittelleitungen 17 und 11 angeordnet, die über erfindungsgemäß angeordnete Drosseln bzw. einstellbare Drosseln 20 mit den Steuerbohrungen 3 und 3'verbunden. Diese Steuerbohrungen 3 und 3'befinden sich im Bereich der Endlagen der Kolbenflächen 13 und 19. Des weiteren sind die Druckmittelleitungen 17 und 11 eingangsseitig mit jeweils zwei Rückschlagventilen 12 und 16 verbunden. Das Rückschlagventil 12 liegt quasi parallel zu der Drossel 20. Das Rückschlagventil 16 ist mit der Steuerbohrung 2 bzw. 2'druckmittelschlüssig verbunden. Die Orientierung der beiden Rückschlagventile 12 und 16 ist gegensinnig. Das heißt, eine Beaufschlagung der Druckmittelleitung 17 oder 11 führt zu einer Sperrung der Rückschlagventile 16 und zu einer Durchsteuerung der Drosselrückschlagventile 12.

Zur Verdeutlichung der Funktionsweise sei nachfolgend ein Betriebsfall dargestellt:

Die Druckmittelversorgungsluft P wird in der hier dargestellten Position der Elemente des Umsteuerventiles in die Druckmittelkammer 10 gegeben. Von der Druckmittelkammer 10 bzw. über dieselbe wird gleichzeitig die Druckmittelleitung 11 belüftet. Durch die Druckmittelleitung 11 wird die Versorgungsluft durch das Rückschlagventil 12, welches hierbei angehoben bzw. geöffnet wird, die Steuerbohrung 3'belüftet. Über die Belüftung der Steuerbohrung 3'wird der Zylinderraum an der Kolbenfläche 13 belüftet. Der Arbeitsyzlinder tritt in Aktion und das Zahnstangenelement 14 verschiebt sich in Richtung X. Die Luft in dem gegenüberliegenden Zylinderraum 15, der von der Kolbenfläche 19 beaufschlagt wird entweicht über die Steuerbohrung 2 und das Rückschlagventil 16, welches bei dieser Beaufschlagung angehoben wird, so daß über die Leitung 17 in die entsprechende Druckmittelkammer 18 des Umsteuerventiles in bzw. durch die Entlüftungsöffnung 4 letztlich der Druckmittelraum 15 entlüftet wird. Die Betätigung über diese Strecke, d. h. im wesentliche die Strecke, die die Kolbenfläche 19 zwischen den Steuerborhungen 1 und 2 zurücklegt, ist hierbei der sogenannte Schnellgang. Überfährt nun die Kolbenfläche 19 die Steuerbohrung 2, so kann in dem verbleibenden Druckmittelraum 15, der von der Kolbenfläche 19 begrenzt wird, die nun verbleibende Luft nur noch gedrosselt über den Anschluß 3 und das Drosselventil 20 entweichen, da das Rückschalgventil 12 bei dieser Beaufschlagung schließt. Das heißt, parallel zum Rückschlagventil 12 liegt die Drossel 20 quasi in einem By-pass. Über die Einstellung der Drossel kann nunmehr die Endlage bestimmt werden. Kurz vor Erreichen der Endlage überfährt die Kolbenfläche 13 ebenfalls die Steuerbohrung 1'. Dadurch wird die Kolbenfläche 21 des Umsteuerschiebers 22 des Umsteuerventiles beaufschlagt. Der Umsteuerschieber wird dabei in Y-Richtung verschoben und der gesamte dargestellte Vorgang wird in die andere Richtung umgekehrt. Damit werden die gegenüberliegenden Elemente Rückschlagventile 12 und 16 sowie die einstellbare Drossel 20 der Steuerbohrungen 2'und 3'beaufschlagt. Ebenso findet die Entlüftung des gegenüberliegenden Raumes nunmehr über die Entlüftungsöffnung 4'des Umsteuerventiles statt.

| Bezugszeichen | |
|---|---|
| Steuerbohrungen | 1, 2, 3, 1', 2', 3', |
| Druckmittelanschlüsse | 4, 4', P |
| Druckluftkammer | 10, 18, |
| Druckluftleitungen | 11, 17, |
| Rückschlagventil | 12, 16, |
| Drosseln | 20, |
| Kolbenfläche | 13, 19, |
| Druckmittelraum | 15, |
| Umsteuerventil | 100 |
| Kolbenfläche des Umsteuerschiebers | 21 |
| Umsteuerschieber | 22 |
| Betätigungsrichtung Zahnstange | X |
| Betätigungsrichtung Umsteuerschieber | Y |
| Drehabtrieb | 30, |
| Ventilteller des Umsteuerventiles | 40, 41, 42, 43, |

## Patentansprüche

1. Druckmittelbetriebener Scheibenwischermotor mit einem Umsteuerventil (100) sowie einem doppeltwirkenden Arbeitszylinder (13-15), in welchem zwei Kolbenflächen (13,19) mit einem dazwischenliegenden mit einem verzahnten Drehelement (30) zusammenwirkenden Zahnstangenelement (14) verbunden sind, wobei entlang des jeweiligen Betätigungshubes mindestens zwei von den jeweiligen Kolbenflächen (13,19) überfahrbare Steuerbohrungen (1,1') angeordnet sind,
von denen jeweils eine der Umsteuerung des Umsteuerventils (100) dienende, innere Steuerbohrung (1,1') nahe dem inneren Endanschlag und jeweils eine der Betätigung der Kolbenflächen (13,19) dienende, äußere Steuerbohrung (3,3') nahe dem Endanschlag angeordnet ist,
dadurch gekennzeichnet,
daß jeweils eine mittlere Steuerbohrung (2, 2') entlang des jeweiligen Betätigungshubes in einem definierten Abstand vom Endanschlag entfernt angeordnet ist und mit einem Rückschlagventil (16) zur ungebremsten Entlüftung verbunden ist, und daß die jeweils äußere Steuerbohrung (3, 3') in ein in Entlüftungsrichtung sperrendes Rückschlagventil (12) mündet, welches strömungsmäßig parallel dazu mit einer einstellbaren Drossel (20) versehen ist.

2. Druckmittelbetriebener Scheibenwischermotor nach Anspruch 1,
dadurch gekennzeichnet,
daß die jeweilige äußere Steuerbohrung (3, 3') nahe dem Endanschlag der jeweiligen Kolbenfläche (13, 19) in Bezug auf den jeweiligen Betätigungshub derart nahe am Endanschlag angeordnet ist, daß sie von der jeweiligen Kolbenfläche nicht mehr überfahren werden kann.

## Claims

1. Pressure-operated windscreen wiper motor having a reverse valve (100) and a dual-action working cylinder (13-15) in which two piston surfaces (13, 19) are joined to an intermediately located toothed rack element (14) co-operating with a toothed rotary element (30), wherein at least two control bores (1, 1'), which can be crossed by the respective piston surfaces (13, 19), are arranged along the respective actuation stroke, of which one inner control bore (1, 1') each, used for reversing the reverse valve (100), is arranged near the inner end stop, and one outer control bore (3, 3') each, used to actuate the piston surfaces (13, 19), is arranged near the end stop,
characterised in that
a central control bore (2, 2') each is arranged along the respective actuation stroke at a specific distance away from the end stop, and is connected to a non-return valve (16) for free pressure release, and in that the outer control bore (3, 3') in each case opens into a non-return valve (12) which blocks in the pressure release direction and which is provided with an adjustable flow restricter (20) in parallel thereto with respect to flow.

2. Pressure-operated windscreen wiper motor according to claim 1, characterised in that
each outer control bore (3, 3') near the end stop of the respective piston surface (13, 19) with respect to the respective actuation stroke is arranged so close to the end stop that it can no longer be crossed by the respective piston surface.

## Revendications

1. Moteur d'essuie-glace entraîné par fluide sous pression, à une valve d'inversion (100) ainsi qu'à un cylindre moteur à double effet (13 - 15), dans lequel deux surfaces de piston (13, 19) sont reliées à un élément de crémaillère (14) y interposé, qui se trouve en coopération avec un élément rotatif, à au moins deux alésages de commende (1, 1') étant disposés le long de la course d'actionnement respective, sur lesquels lesdites surfaces de piston respectives (13, 19) peuvent passer,
à respectivement un desdits alésages de commande, qui est un alésage de commande (1, 1') intérieur et sert à changer ladite valve d'inversion (100) étant disposé à proximité de la butée de fin de course intérieure, et à respectivement un desdites alésages de commande, qui est un alésage de commande extérieur (3, 3') et qui sert à actionner lesdites surfaces de piston (13, 19), étant disposé à proximité de la butée de fin de course,
caractérisé en ce
qu'un alésage de commande central respectif (2, 2') est disposé le long de la course d'actionnement respective à un écart par une distance définie de ladite butée de fin de course et relié à une soupape de retenue (16) pour l'aération non freinée, et en ce que l'alésage de commande extérieur respectif (3, 3') débouche dans une soupape de retenue (12) qui ferme en sens d'aération et qui est équipée d'un étranglement ajustable (20) en parallèle en ce qui concerne l'écoulement.

2. Moteur d'essuie-glace entraîné par fluide sous pression selon la revendication 1,
caractérisé en ce que l'alésage de commande extérieur respectif (3, 3') à proximité de ladite butée de fin de course de la surface de piston respective (13, 19) est disposé, par rapport à la course d'actionnement respective, à un écart de la butée de fin de course si court que la surface de piston respective ne puisse plus passer sur cet alésage.
